# EUROPEAN PATENT SPECIFICATION

(11) **EP 0 824 499 B1**
(45) Date of publication and mention of the grant of the patent: **03.03.1999**
(21) Application number: 96913654.8
(22) Date of filing: 10.05.1996
(51) Int. Cl.: B67D 5/04, B01D 53/22

(54) **APPARATUS AND METHOD FOR REDUCING THE PRESSURE IN A VOLATILE ORGANIC CHEMICAL TANK ULLAGE**
VORRICHTUNG UND VERFAHREN ZUR ABSENKUNG DES DRUCKES IM LEERRAUM EINES TANKES ZUR LAGERUNG VON FLÜSSIGEN, ORGANISCHEN, CHEMISCHEN VERBINDUNGEN
APPAREIL ET PROCEDE DE REDUCTION DE LA PRESSION DANS LE CREUX D'UNE CITERNE CONTENANT UN PRODUIT CHIMIQUE ORGANIQUE VOLATILE

(30) Priority: 12.05.1995 US 440312; 12.05.1995 US 490442
(43) Date of publication of application: 25.02.1998
(73) Proprietor: GILBARCO INC., Greensboro North Carolina 27420 (US)
(72) Inventor: NANAJI, Seifollah, Greensboro, NC 27409 (US)
(74) Representative: Fitchett, Stuart Paul
(86) International application number: GB9601126
(87) International publication number: WO9635634

(56) References cited:
- WO-A-93/22031
- DE-A- 4 225 170

## Description

The present invention relates to apparatus for reducing the pressure in the ullage of a volatile organic chemical (VOC) tank, to prevent fugitive emissions of polluting VOC vapours, and more particularly fuel storage tanks.

Storage tanks and piping for volatile organic chemicals have an area above the liquid known as the ullage, in which air and volatile chemical vapours reside. Various pressure changes can occur in the tank due to diurnal temperature changes, periodic refilling and the like, leading to an overpressure in the underground tank. These overpressures are of concern, since the result can be fugitive emissions of pollutants to the atmosphere. If pressurised, the air and volatile chemical vapours will have a tendency to leak out of any hole in the tank or piping of the system, thus allowing the release of the polluting volatile chemical vapour to the atmosphere, which is undesirable from an environmental protection point of view. It is also undesirable economically, because the material lost to the atmosphere has commercial value. This is particularly a problem with fuel storage tanks at fuel retail sites, where fuel dispensers employ vapour recovery to retrieve vapours that would otherwise be released into the atmosphere at the neck of a tank being filled.

The development of vapour recovery fuel dispensers began in the early '70's and included some dispensers that had assist-type mechanisms for pumping the vapours to the underground storage tank in service stations. These did not generally gain favour and, throughout the 1970's and 1980's, balance system vapour recovery fuel dispensers were more common. In the balance system, a closed, sealed path is established between the fuel tank being filled and the underground tank. The movement of the liquid from the underground tank to the automobile tank creates a higher pressure area in the automobile tank and a lower pressure in the underground tank to induce the vapour to move from the automobile tank to the underground tank. The systems were cumbersome and prone to failure.

In the 1990's, new vapour recovery fuel dispensers are often equipped with vapour pumps to actively pump the vapour to the underground storage tank, as embodied in the VAPORVAC® line of dispensers manufactured and sold by Gilbarco, Inc., Greensboro, North Carolina, the present applicant.

These systems are exemplified by numerous patents including US patents 5,040,577 to Pope, 5,195,564 to Spalding, and 5,333,655 to Bergamini. The disclosures of these three patents are incorporated herein by reference.

The assisted vapour recovery systems of the 1990's have proven to be very capable of transporting the vast majority of the vapour from the filler pipe of the automobile to the underground storage tank. However, in some cases, the act of pumping of the vapour can lead to pressurisation of the ullage in underground storage tanks and associated piping. The pressurised ullage will have a tendency to leak out of any hole in the tank or piping of the system, thus allowing the release of the polluting fuel vapour to the atmosphere, precisely the situation that the vapour recovery fuel dispensers are intended to avoid.

It has also been found that the balance systems which have been in use for so many years can be subject to fugitive emissions of this sort. As with other storage tanks various pressure changes can occur in the tank, regardless of whether there is pumping going on, including diurnal temperature changes and the like, leading to an overpressure in the underground tank.

The present applicant addressed the problem of fugitive emissions of fuel vapours in international patent application WO 95/13984 filed November 16, 1994. The entire disclosure of that application is incorporated herein by reference. That prior application discloses and claims a fuel storage tank vent filter system in which vapours from the underground tanks are directed to a chamber having a membrane such as the fractionating membrane developed by GKSS-Forschungszentrum Gcesthacht GmbH of Germany and described in "Operating Experiences with Membrane Systems in Gasoline Tank Farms," presented in by K. Ohlrogge at the 1991 Ninth Annual Membrane Technology/Planning Conference in Newton, Massachusetts, October 4-6, 1991, or "Volatile Organic Compound Control Technology by Means of Membranes," presented by K. Ohlrogge at the 1993 Eleventh Annual Membrane Technology/Separation Planning Conference in Newton, Massachusetts on October 11-13, 1993, the disclosures of which are hereby incorporated by reference. The membrane permits transmission of VOC's through it (permeate) in preference differentially to atmospheric vapours. That system calls for a pump to be arranged to draw the pollutants through the membrane and redirect them to the underground tank, permitting air (retentate) to be released to the vent pipe of the service station tank arrangement. Similar membranes are available from Membrane Technology and Research. Inc., Menlo Park, California.

While the apparatus described in the earlier application works well, it does not work optimally, and the vapours released out the vent include greater amounts of VOC vapours than are necessary or desirable. Although the prior application does not specifically address itself to non-fuel volatile chemicals it is equally applicable to such.

According to a first aspect of the present invention there is provided apparatus for reducing the pressure in a volatile organic chemical (VOC) tank ullage, the apparatus comprising:
a first conduit connected to the volatile organic chemical tank ullage;
a vapour extractor for causing vapour to flow along the first conduit from the volatile organic chemical tank ullage;
a pressure sensor for detecting the pressure in the volatile organic chemical tank ullage;
a separation module having an inlet connected to the first conduit, a separation membrane, a permeate outlet separated from the inlet by the separation membrane, and a retentate outlet;
a second conduit connected between the permeate outlet and the volatile organic chemical tank;
a vapour pump associated with the second conduit for creating a lower pressure in the separation module at the permeate outlet than at the inlet so as to induce selected vapours to pass through the separation membrane,
a vent associated with the retentate outlet to vent retentate to atmosphere;
a VOC detector to detect VOC concentration associated with the vent; and
a control means, the control means being adapted to receive inputs from the pressure sensor and the VOC detector and output control signals to the vapour extractor and the vapour pump to actuate the vapour extractor and the vapour pump to draw vapour from the ullage, when the ullage pressure exceeds a pressure threshold, and return permeate to the tank whereby the rate of flow of vapour along the second conduit and/or pressure at the inlet/retentate side of the separation module is controlled at least in part in dependence on the concentration of VOC's detected by the VOC detector.

By employing the present invention it is possible to monitor the concentration of VOC's being released into the atmosphere and to control the residence time of VOC's in proximity to the membrane accordingly.

The vapour extractor can be controlled, at least in part, independence of the output of the VOC detector such that the flow rate along the first conduit is reduced when the concentration in the vent exceeds a predetermined threshold. In this manner the residence time can conveniently be controlled. The vapour extractor can conveniently be positioned in the first conduit between the tank and separation module and may comprise of variable speed pump or a constant speed pump and variable valve, either a solenoid value or proportional valve, or could be any other means of moderating the flow.

The apparatus may comprise a discharge valve associated with the retentate outlet for restricting the vapour through the outlet at least independence on the output of the VOC detector. The discharge valve can conveniently by located on the vent pipe which will restrict the flow of vapour through the retentate outlet increasing the residence time of the vapour in the vicinity of the membrane.

The discharge valve may act to increase the pressure at the inlet/retentate side of the separation module when the VOC detector indicates the VOC concentration in the vent pipe exceed a predetermined threshold. An increase in the pressure would increase the rate at which selected vapours permeate through the membrane. However, the maximum pressure of the vapour extractor may have to be set to ensure that condensation of the vapours does not occur on the membrane, which would clog the membrane. The predetermined threshold VOC concentration in the vent pipe may be a variable dependant on at least one other parameter.

Preferably the apparatus further includes a vent stack for the tank having a pressure relief valve thereon set to open if a pressure substantially in excess of the pressure threshold is reached in the ullage, for this will ensure that the pressure in the ullage can not exceed a safe level.

A vapour recovery system employing apparatus as described above is particularly advantageous, for often the ratio of vapour recovered to the quantity of fuel dispensed is slightly in excess of one to one, acting to increase the pressure in the VOC tank ullage, in this case fuel tank ullage.

According to a second aspect of the present invention there is provided a method for reducing the pressure in a volatile organic chemical tank ullage comprising: detecting the pressure in the volatile organic chemical tank ullage, withdrawing vapour from the volatile organic chemical tank ullage when the detected pressure exceeds a pressure threshold. Directing the withdrawn vapour to a first side of a separation membrane, creating a lower pressure on the second, downstream side of the separation membrane so as to induce selected vapours to permeate through said separation membrane, permitting the escape of retentate from adjacent the first side of the separation membrane to atmosphere, detecting VOC concentrations in the escaping retentate, and controlling the rate of the vapour withdrawing step to control the concentration of VOC's in the escaping retentate to maintain such concentration at a low level.

One embodiment of the present invention will now be described by way of example only with reference to the accompanying drawings of which:-
FIGURE 1 is a schematic view of the components of a preferred embodiment of the invention; and
FIGURE 2 is a flow chart showing the processing of the apparatus depicted in Figure 1.

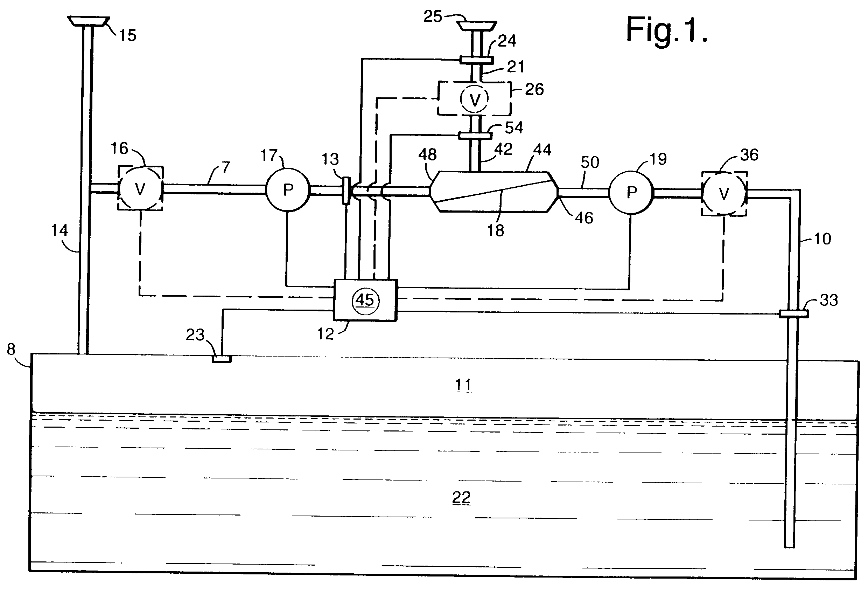

Referring to Figure 1, there is shown a storage tank 8 which is typically underground, but need not be an underground tank for purposes of this invention. The tank 8 holds a liquid volatile organic chemical 22 such as dry cleaning fluid, petroleum fuel, or any other suitable volatile organic compound. Preferred embodiments of the present invention are capable of dealing with the following chemicals, at a minimum:

### AROMATICS

Benzene
Toluene
Xylene

### ALCOHOL

Isopropanol
Methanol

### HYDROCARBONS

Carbon Tetrachloride
CFC-11
CFC-12
CFC-113
HCFC-123
HFC-134a
Methyl Bromide
Methylene Chloride
Perchloroethylene
1,1,1,-Trichloroethane
Trichloroethylene
Vinyl Chloride

### KETONES

Acetone
Methyl Ethyl Ketone

### ALIPHATIC HYDROCARBONS

Butane
Hexane
Octane

Above the liquid 22 in the tank 8 is a volume 11 known as the ullage holding vapour within the tank 8. The contents of the ullage 11 will be vapours of the liquid volatile chemical 22 and, typically, air. The air arrives in the tank 8 through numerous possible paths. For example, air might be ingested through pressure vacuum value 15 atop vent pipe 14. If the pressure in the ullage 11 falls to a low level, the pressure vacuum valve 15 opens in conventional fashion to permit air to be ingested and avoid potentially dangerous under pressure in the tank 8. However if the tank is for part of a fuel dispensing system employing vapour recovery, then air will be present primarily as a consequence of the vapour recovery sucking a vapour/air mixture into the system which mixture will be returned to the underground tank.

As depicted in Figure 1, the vent pipe 14 forms part of a conduit 7 leading from the ullage 11 to the variable speed vapour pump 17. At the end of the conduit 7 is a membrane module 44. The membrane module 44 has an inlet 48 to the intake conduit 7 and a permeate outlet 46 and a retentate outlet 42. A VOC fractionating membrane 18 like those discussed above divides the module 44 so that the inlet 48 and retentate outlet 42 are on one side of the membrane 18, and the permeate outlet 46 is on the opposite side of the membrane. The outlet 46 communicates through a second conduit 50 to a vacuum pump 19 and then back to the storage tank 8. Note that the return conduit 50 extends low into the tank 8 so that its outlet may be submerged in the liquid 22. Outlet 42 has the vent pipe 21 connected to release air to atmosphere and thus reduce the volume of vapour and, hence, the pressure. At the end of the exhaust pipe 21, a pressure vacuum valve 25 like pressure vacuum valve 15 may be provided.

Affixed to the tank 8 is a pressure sensor 23 to monitor the pressure within the tank. It outputs a pressure signal to an electronic controller 12. The controller 12 can be a suitable controller such as a programmable controller or other microprocessor based control. Other suitable analog or digital electrical, pneumatic, hydraulic or fibre optic based controller may be substituted. The controller 12 has outputs to the vapour pump 17 and vacuum pump 19.

By providing pumps 17 and 19 on the two sides of the fractionating membrane 18, the control over the vapour coming through the first conduit 7 can be increased so that the permeate of VOC's through the membrane 18 for return to the tank 8 is increased greatly over the prior technology. This is accomplished by further providing a VOC sensor 54 on the retentate exhaust pipe 21. The output of the sensor 54 is fed to the controller 12.

In operation, the system just described operates as follows: the electronic control 12 through the pressure gauge 23 monitors the pressure in tank 8. When the pressure exceeds a threshold, the electronic control 12 turns on the variable speed vapour pump 17 and vacuum pump 19. Typically, the vacuum pump 19 draws down a very low vacuum on the downstream side of the membrane 18. Pressure differentials of an atmosphere across the membrane 18 are desirable. The pump 17 provides the vapour to the proximity of the membrane 18 through which the VOC's can be drawn under the action of the vacuum pump 19. The components of the vapour that do not pass through the membrane are retained in module 44 and are available to pass up the exhaust pipe 21 in proximity of the VOC sensor 54. The VOC sensor 54 evaluates the proportion of VOC's in the exhausted gas and applies a signal indicative of same to the electronic control 12, which compares that signal with a predetermined threshold. If VOC content of exhausted retentate exceeds a desired level, the electronic controller 12 modifies the signal to the variable speed pump 17 to slow its pumping. This permits the vapour passing through the path of the pump 17 and up the stack 21 to have a higher residence in proximity to the membrane 18 and increases the likelihood that the VOC vapour components will pass through the membrane 18 for return to the tank 8. The monitoring of the VOC's in the exhausted retentate continues and is used as a feedback signal to modulate the pumping rate of the variable speed pump 17. Preferably, the pump 19 is left on for a period of time after pump 17 is turned off. This will permit any residual VOC vapours that are attracted to but not yet passed through the membrane to be induced to pass through the membrane.

The vapour returned to the tank then can recondense and be available for reuse. The invention thus provides a both environmental and commercial advantages.

Also shown in Figure 1 are various additional or alternate components. For example, a solenoid or proportional valve 16 may be provided in series with the vapour pump 17. In this instance, the pump 17 need not be a variable speed pump, but could be a constant speed pump and the rate of vapour passage through the pump may be modulated by control of the valve 16. If valve 16 is a proportional valve, the amount of opening of the proportional valve would be controlled by the electronic control 12 to achieve the same results described above. If the valve 16 is a solenoid valve, it is opened and closed under the control of controller 12 so as to have an "open" duty cycle suitable for the desired flow rate. The controllable pumping of the vapour is thus performed by a vapour extractor.

Also in the first conduit 7 leading to the inlet 48 of the separation module 44 is a temperature sensor 13. The temperature sensor 13 reads the temperature of the vapour exiting the pump 17 and passes a temperature signal to controller 12. If a temperature rise indicative of excessive heating of the vapour by the pump 17 is noted, the controller 12 can take appropriate action, such as shutting down the 'scrubber' altogether. Such excessive heating may be determined by a temperature exceeding a threshold or by the rate of rise exceeding a threshold.

In addition, the second conduit 50 may be provided with a solenoid or proportional valve 36 operating in conjunction with the vacuum pump 19 to modulate the flow through the second conduit 50 as described above with respect to the valve 16.

The valves 16 and 36 and their associated control lines to the electronic control are shown in phantom in Figure 1 to show that these are optional possible designs.

A further option is to provide a solenoid or proportional valve 26 in the exhaust stack 21, also under the control of controller 12. The solenoid or proportional valve 26 can be used to provide further control over the vapour on the upstream side of the membrane 18 to further increase the vapour's residence time in proximity to the membrane. The valve 26 can be used to "choke" the discharge from the membrane module 44 and simply prevent the escape of VOC's vapours at too fast a rate, and thereby increase the residence time.

The exhaust stack 21 can also be provided with an exhaust flow rate sensor 24 providing an input signal back to the electronic control 12 as a safety diagnostics feature. The flow rate sensor 24 can be used to monitor the flow rate of the retentate out the exhaust stack and signal a malfunction if the flow rate falls outside a predetermined expected range and thereby shut down the scrubber operation for safety reasons.

Finally, a temperature sensor 33 may be provided in the second conduit 50 downstream of the vacuum pump 19 to operate like the aforementioned temperature sensor 13 with respect to the first inlet conduit to the membrane module.

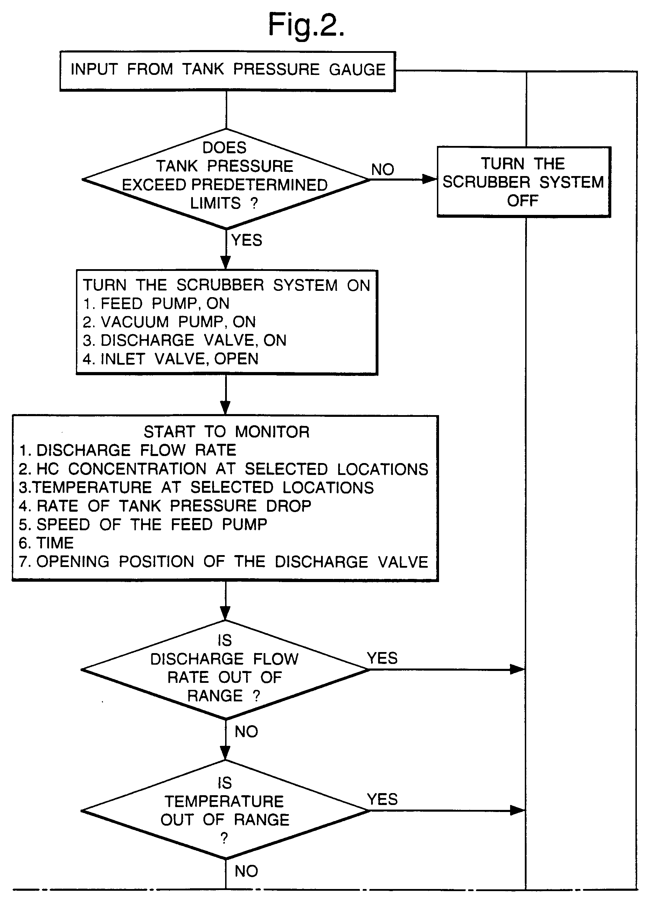

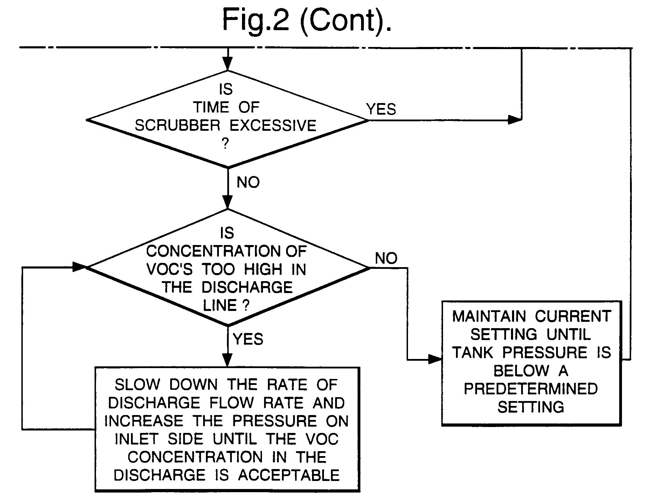

Referring now to Figure 2, the processing of the apparatus can be seen in flow chart form, starting at the top of the figure. The flow chart includes a full set of diagnostics routines complementing the full set of options shown in Figure 1.

Starting at the top of the figure, the pressure from pressure gauge 23 is read and compared to a predetermined limit by controller 12. If the pressure does not exceed a predetermined limit, then the controller 12 keeps the scrubber system turned off. If it exceeds the determined limit, the scrubber system is turned on by turning on the pump 17, and the vacuum pump 19 , opening the discharge valve 26, if present, and opening the inlet valve 16, as well as valve 36, should they be present. This pumping by the pumps 17 and 19 will extract vapours from the ullage 11 and deliver them to proximity with the membrane 18. The pump 19 will put the VOC components of the vapour through the membrane 18 and return them to the tank 8 through conduit 50. The vapours that do not pass through the membrane 18 will pass out of the stack 21.

At the same time, the electronic control 12 will begin to monitor the discharge flow rate read from the flow sensor 24, the VOC concentration as measured by the VOC sensor 54, and the temperature as read by the temperature sensors 13 and 33. The electronic control 12 has an internal timer 45 which can be used for several purposes. First, it can measure the rate of the pressure drop in the tank 8 by comparing the readings from the pressure sensor 23 over time and gauge the effectiveness of the operation by the rate of pressure drop. In one method the controller 12 can use the rate of pressure drop, even to the exclusion of the VOC concentration sensed by the VOC sensor 54.

The time of the entire operation from the beginning of the turning on of the scrubber system can also be monitored to see that it does not exceed a predetermined threshold. If the reduction in pressure should only take five minutes under normal conditions, but the scrubber has continued to operate for, ten minutes, for example, it can be ascertained that a problem has occurred and the system can be shut down by controller 12.

Finally, the opening position of the discharge valve 26 can be monitored to provide data from which the rate of discharge of retentate can be ascertained. The speed of the feed pump 17 can also be measured to ascertain the rate at which the vapour is being addressed to the membrane 18.

From the monitored valves, four decision blocks are encountered. These need not be in the order given in the flow chart in Figure 2. If the discharge flow rate sensed by the flow sensor 24 is out of range as determined by the controller 12, then it can be ascertained that a malfunction has occurred and shut the scrubber down. Similarly, if the temperature sensed by sensor 13 or 33 is out of range, the scrubber system can be turned off. As noted above, if the period during which the scrubbing system is on is excessive, the scrubber system can be turned off.

If none of these have occurred, the VOC concentration measured by the VOC sensor 54 is evaluated. If it is above a predetermined threshold, then it can be ascertained that the vapours from the first conduit into the module 44 and up the vent stack 21 are moving too fast and should be retarded to increase their residence time in proximity to the membrane 18. The rate of the discharge is thus slowed by closing valve 26 more and/or the pumping rate on the inlet side of the membrane 18 is decreased until the concentration of VOC's determined by the VOC sensor 54 is acceptable.

The rate of discharge and inlet pressure can be modulated in several fashions, as suggested above. If the system is equipped with a discharge valve 26, whether it be proportional or solenoid, the amount of opening can be decreased, so as to limit the rate of escape of retentate and thereby increase its residence time in proximity to membrane 18.

Alternatively, the pump 17 can be slowed so that the delivery of vapour to the upstream side of the membrane 18 is decreased and thereby increase the residence time of the vapour in proximity to that membrane. Of course, the equivalent of slowing of variable speed pump 17 by reducing the opening of a proportional or solenoid valve 16 in series with a constant speed pump may also be directed by the electronic control 12.

In the case of the presence of both a controllable discharge valve 26 and a variable speed pump 17 (or the equivalent constant speed pump and variable valve 16), a third control option can be implemented by controller 12. The pump 17 can be speeded up to increase the delivery of vapour to the upstream side of the membrane 18, while the valve 26 is reduced. This is particularly useful for a proportional type discharge valve as 26. The effect of increasing the feed rate through pump 17 and decreasing the flow through discharge valve 26 will be to increase the pressure in a membrane module 44 on the inlet side of the membrane 18. That increase in pressure will increase the pressure differential across the membrane 18 and thereby increase the flow of VOC molecules through the membrane to the permeate side for delivery to the tank 8.

Those of ordinary skill in the art will appreciate that there are various modifications to the precise components described above which can be made to the system within the scope of the appended claims.

## Claims

1. Apparatus for reducing the pressure in a volatile organic chemical (VOC) tank ullage, the apparatus comprising:
a first conduit connected to the volatile organic chemical tank ullage;
a vapour extractor for causing vapour to flow along the first conduit from the volatile organic chemical tank ullage;
a pressure sensor for detecting the pressure in the volatile organic chemical tank ullage:
a separation module having an inlet connected to the first conduit, a separation membrane, a permeate outlet separated from the inlet by the separation membrane, and a retentate outlet;
a second conduit connected between the permeate outlet and the volatile organic chemical tank;
a vapour pump associated with the second conduit for creating a lower pressure in the separation module at the permeate outlet than at the inlet so as to induce selected vapours to pass through the separation membrane;
a vent associated with the retentate outlet to vent retentate to atmosphere;
a VOC detector to detect VOC concentration associated with the vent; and
a control means, the control means being adapted to receive inputs from the pressure sensor and the VOC detector and output control signals to the vapour extractor and the vapour pump to actuate the vapour extractor and the vapour pump to draw vapour from the ullage, when the ullage pressure exceeds a pressure threshold, and return permeate to the tank whereby the rate of flow of vapour along the second conduit and/or pressure at the inlet/retentate side of the separation module is controlled at least in part in dependence on the concentration of VOC's detected by the VOC detector.

2. Apparatus as claimed in claim 1 wherein the vapour extractor is controlled, at least in part, in dependance on the output of the VOC detector such that the flow rate along the conduit is reduced when the VOC concentration in the vent exceeds a predetermined threshold.

3. Apparatus as claimed in claim 1 or 2 wherein the vapour extractor is located in the rust conduit between the tank and the separation module.

4. Apparatus as claimed in any preceding claim comprising a discharge valve associated with the rentenate outlet for restricting the flow of vapour through the outlet at least in part in dependance on the output of the VOC detector.

5. Apparatus as claimed in claim 4 wherein the discharge valve acts to increase the pressure at the inlet/retentate side of the separation module when the VOC detector indicates the VOC concentration in the vent exceeds a predetermined threshold.

6. Apparatus as claimed in claim 2 or 5 wherein the predetermined threshold is a variable dependant on at least one other parameter.

7. Apparatus as claimed in any preceding claim wherein the control means includes a routine to control the vapour extractor to extract vapour at a slower rate than the maximum achievable by the extractor, to provide a long residence time for VOC vapour molecules adjacent the separation membrane and thereby increase the separation of VOC molecules from the retentate to the permeate.

8. Apparatus as claimed in any preceeding claim wherein the vapour extractor comprises a variable speed pump.

9. Apparatus as claimed in any preceding claim wherein the second conduit extends to a portion of the tank below the ullage.

10. Apparatus as claimed in any preceding claim including a further vent for the tank having a pressure relief valve thereon set to open if a pressure substantially in excess of the pressure threshold is reached in the ullage.

11. Apparatus as claimed in any preceding claim further comprising a temperature sensor downstream of the vapour extractor to input a sensed temperature to the control means, and the control means having a routine to halt vapour extraction by the vapour extractor if an undesirable temperature rise is sensed.

12. Apparatus as claimed in any preceding claim further comprising a temperature sensor downstream of said vapour pump and to input a sensed temperature to the control means, and the control means having a routine to halt vapour extraction by the vapour extractor if an undesirable temperature rise is sensed.

13. Apparatus as claimed in any preceding claim further comprising a flow sensor associated with said retentate outlet for providing flow signals to the control means, wherein the control means monitors the rate of discharge through the retentate outlet and to halt vapour extraction by the vapour extractor if the monitored rate of discharge indicates a malfunction.

14. Apparatus as claimed in any preceding claim further comprising a timer wherein the control means includes a routine to monitor the duration of vapour extraction and to halt vapour extraction by the vapour extractor if the duration indicates a malfunction.

15. Apparatus as claimed in any preceding claim for reducing VOC emissions from a fuel storage tank.

16. A vapour recovery system for a fuel dispenser employing apparatus as claimed in claim 15.

17. A method for reducing the pressure in a volatile organic chemical tank ullage comprising the steps of:
detecting the pressure in the volatile organic chemical tank ullage,
withdrawing vapour from the volatile organic chemical tank ullage when the detected pressure exceeds a pressure threshold. Directing the withdrawn vapour to a first side of a separation membrane, creating a lower pressure on the second, downstream side of the separation membrane so as to induce selected vapours to permeate through said separation membrane, permitting the escape of retentate from adjacent the first side of the separation membrane to atmosphere, detecting VOC concentrations in the escaping retentate, and controlling the rate of the vapour withdrawing step to control the concentration of VOC's in the escaping retentate to maintain such concentration at a low level.

18. A method as claimed in claim 18 wherein said withdrawing step comprises pumping vapour from the volatile organic chemical tank and said controlling step comprises controlling the rate at which the vapour is pumped.

19. A method as claimed in claim 18 or 19 wherein the step of permitting the escape of retentate from adjacent the first side of the separation membrane further comprises controlling the opening of a control valve for the retentate to permit controlled escape of relatively VOC-free air to atmosphere.

## Patentansprüche

1. Vorrichtung zum Absenken des Drucks im Leerraum eines Tanks für flüchtige organische Chemikalien (VOC), wobei die Vorrichtung umfaßt:
eine erste Leitung, die mit dem Leerraum des Tanks für flüchtige organische Chemikalien verbunden ist,
eine Dampfextraktionsvorrichtung, um zu bewirken, daß Dampf entlang der ersten Leitung aus dem Leerraum des Tanks für flüchtige organische Chemikalien strömt,
einen Drucksensor, um den Druck im Leerraum des Tanks für flüchtige organische Chemikalien zu detektieren,
ein Trennungsmodul, das einen Einlaß, der mit der ersten Leitung verbunden ist, eine Trennungsmembran, einen Permeatauslaß, der von dem Einlaß durch die Trennungsmembran getrennt ist, und einen Retentatauslaß aufweist,
eine zweite Leitung, die zwischen den Permeatauslaß und den Tank für flüchtige organische Chemikalien geschaltet ist,
eine Dampfpumpe, die zu der zweiten Leitung gehört, um einen niedrigeren Druck in dem Trennungsmodul am Permeatauslaß als am Einlaß zu schaffen und somit zu veranlassen, daß ausgewählte Dämpfe durch die Trennungsmembran hindurchtreten,
eine Entlüftung, die zum Retentatauslaß gehört, um Retentat zur Atmosphäre zu entlüften,
einen VOC-Detektor, um die zu der Entlüftung gehörende VOC-Konzentration zu detektieren, und
ein Steuermittel, wobei das Steuermittel derart ausgebildet ist, daß es Eingänge von dem Drucksensor und dem VOC-Detektor empfängt und Steuersignale an die Dampfextraktionsvorrichtung und die Dampfpumpe ausgibt, um die Dampfextraktionsvorrichtung und die Dampfpumpe zu betätigen, so daß Dampf aus dem Leerraum abgezogen wird, wenn der Leerraumdruck eine Druckschwelle überschreitet, und Permeat in den Tank zurückgeführt wird, wodurch die Strömungsrate von Dampf entlang der zweiten Leitung und/oder Druck auf der Einlaß/Retentatseite des Trennungsmoduls mindestens zum Teil in Abhängigkeit von der von dem VOC-Detektor detektierten Konzentration von VOCs gesteuert wird.

2. Vorrichtung nach Anspruch 1, wobei die Dampfextraktionsvorrichtung mindestens zum Teil in Abhängigkeit vom Ausgang des VOC-Detektors gesteuert wird, so daß die Strömungsrate entlang der Leitung verringert wird, wenn die VOC-Konzentration in der Entlüftung eine vorbestimmte Schwelle überschreitet.

3. Vorrichtung nach Anspruch 1 oder 2, wobei die Dampfextraktionsvorrichtung in der ersten Leitung zwischen dem Tank und dem Trennungsmodul angeordnet ist.

4. Vorrichtung nach einem der vorhergehenden Ansprüche, die ein Austragsventil umfaßt, das zu dem Retentatauslaß gehört, um die Strömung von Dampf durch den Auslaß mindestens zum Teil in Abhängigkeit vom Ausgang des VOC-Detektors zu begrenzen.

5. Vorrichtung nach Anspruch 4, wobei das Austragsventil bewirkt, daß der Druck auf der Einlaß/Retentatseite des Trennungsmoduls erhöht wird, wenn der VOC-Detektor anzeigt, daß die VOC-Konzentration in der Entlüftung eine vorbestimmte Schwelle überschreitet.

6. Vorrichtung nach Anspruch 2 oder 5, wobei die vorbestimmte Schwelle eine Variable ist, die von mindestens einem anderen Parameter abhängt.

7. Vorrichtung nach einem der vorhergehenden Ansprüche, wobei das Steuermittel eine Routine umfaßt, um die Dampfextraktionsvorrichtung zu steuern, so daß sie Dampf mit einer langsameren Rate als das Maximum herauszieht, das von der Extraktionsvorrichtung erreichbar ist, und somit eine lange Verweilzeit für VOC-Dampfmoleküle neben der Trennungsmembran schafft und dadurch die Trennung von VOC-Molekülen von dem Retentat zu dem Permeat erhöht.

8. Vorrichtung nach einem der vorhergehenden Ansprüche, wobei die Dampfextraktionsvorrichtung eine Pumpe mit variabler Geschwindigkeit umfaßt.

9. Vorrichtung nach einem der vorhergehenden Ansprüche, wobei die zweite Leitung sich zu einem Abschnitt des Tanks unter dem Leerraum erstreckt.

10. Vorrichtung nach einem der vorhergehenden Ansprüche, die ferner eine Entlüftung für den Tank umfaßt, auf der ein Überdruckventil vorgesehen ist, das auf offen eingestellt wird, wenn ein Druck, der wesentlich größer als die Druckschwelle ist, in dem Leerraum erreicht ist.

11. Vorrichtung nach einem der vorhergehenden Ansprüche, die ferner einen Temperatursensor unterstromig von der Dampfextraktionsvorrichtung umfaßt, um eine erfaßte Temperatur in das Steuermittel einzugeben, und wobei das Steuermittel eine Routine aufweist, um die Dampfextraktion von der Dampfextraktionsvorrichtung anzuhalten, wenn ein unerwünschter Temperaturanstieg erfaßt wird.

12. Vorrichtung nach einem der vorhergehenden Ansprüche, die ferner einen Temperatursensor unterstromig von der Dampfpumpe und zur Eingabe einer erfaßten Temperatur in das Steuermittel umfaßt, und wobei das Steuermittel eine Routine aufweist, um die Dampfextraktion von der Dampfextraktionsvorrichtung anzuhalten, wenn ein unerwünschter Temperaturanstieg erfaßt wird.

13. Vorrichtung nach einem der vorhergehenden Ansprüche, die ferner einen Strömungssensor umfaßt, der zu dem Retentatauslaß gehört, um dem Steuermittel Strömungssignale zu liefern, wobei das Steuermittel die Austragsrate durch den Retentatauslaß überwacht, um die Dampfextraktion von der Dampfextraktionsvorrichtung anzuhalten, wenn die überwachte Austragsrate eine Fehlfunktion anzeigt.

14. Vorrichtung nach einem der vorhergehenden Ansprüche, die ferner ein Zeitglied umfaßt, wobei das Steuermittel eine Routine aufweist, um die Dauer der Dampfextraktion zu überwachen und die Dampfextraktion von der Dampfextraktionsvorrichtung anzuhalten, wenn die Dauer eine Fehlfunktion anzeigt.

15. Vorrichtung nach einem der vorhergehenden Ansprüche, um VOC-Emissionen aus einem Kraftstofflagertank zu verringern.

16. Dampfrückgewinnungssystem für eine Kraftstoffabgabevorrichtung, das eine Vorrichtung nach Anspruch 15 anwendet.

17. Verfahren zum Absenken des Drucks im Leerraum eines Tanks für flüchtige organische Chemikalien mit den Schritten,
daß der Druck im Leerraum des Tanks für flüchtige organische Chemikalien detektiert wird,
daß Dampf aus dem Leerraum des Tanks für flüchtige organische Chemikalien abgezogen wird, wenn der detektierte Druck eine Druckschwelle überschreitet. Daß der abgezogene Dampf auf eine erste Seite einer Trennungsmembran gelenkt wird, daß ein niedrigerer Druck auf der zweiten, unterstromigen Seite der Trennungs-, membran geschaffen wird, um zu veranlassen, daß ausgewählte Dämpfe durch die Trennungsmembran hindurchdringen, daß das Entweichen von Retentat aus der Nachbarschaft der ersten Seite der Trennungsmembran in die Atmosphäre gestattet wird, daß VOC-Konzentrationen in dem entweichenden Retentat detektiert werden, und daß die Rate des Dampfabziehschrittes gesteuert wird, um die Konzentration von VOCs in dem entweichenden Retentat zu steuern und somit eine derartige Konzentration auf einem niedrigen Niveau zu halten.

18. Verfahren nach Anspruch 18, wobei der Abziehschritt umfaßt, daß Dampf aus dem Tank für flüchtige organische Chemikalien gepumpt wird, und wobei der Steuerschritt umfaßt, daß die Rate gesteuert wird, mit welcher der Dampf gepumpt wird.

19. Verfahren nach Anspruch 18 oder 19, wobei der Schritt eines Gestattens des Entweichens von Retentat aus der Nachbarschaft der ersten Seite der Trennungsmembran ferner umfaßt, daß das Öffnen eines Steuerventils für das Retentat gesteuert wird, um ein gesteuertes Entweichen von relativ VOC-freier Luft in die Atmosphäre zu gestatten.

## Revendications

1. Appareil pour réduire la pression dans un manque à remplir d'un réservoir de matières chimiques organiques volatiles (VOC), l'appareil comprenant :
un premier conduit raccordé au manque à remplir du réservoir de matières chimiques organiques volatiles;
un extracteur de vapeurs pour occasionner l'écoulement des vapeurs le long du premier conduit à partir du manque à remplir du réservoir de matières chimiques organiques volatiles;
un détecteur de pression pour détecter la pression dans le manque à remplir du réservoir de matières chimiques organiques volatiles;
un module de séparation présentant une entrée raccordée au premier conduit, une membrane de séparation, une sortie de perméat séparée de l'entrée par la membrane de séparation, et une sortie de rétentat;
un second conduit raccordé entre la sortie du perméat et le réservoir de matières chimiques organiques volatiles;
une pompe de vapeurs associée au second conduit pour créer dans le module de séparation une pression plus faible à la sortie du perméat qu'à l'entrée afin de forcer les vapeurs choisies à passer à travers la membrane de séparation;
une mise à l'air associée à la sortie du rétentat pour mettre le rétentat à l'atmosphère; un détecteur de VOC pour détecter la concentration de VOC associée à la mise à l'air; et
un moyen de régulation, le moyen de régulation étant adapté pour recevoir des entrées provenant du détecteur de pression et du détecteur de VOC et fournir des signaux de régulation à l'extracteur de vapeurs et à la pompe de vapeurs pour actionner l'extracteur de vapeurs et la pompe de vapeurs afin qu'ils tirent les vapeurs à partir du manque à remplir lorsque la pression du manque à remplir dépasse un seuil de pression et renvoyer le perméat vers le réservoir, le débit des vapeurs le long du second conduit et/ou la pression à l'entrée/côté du rétentat du module de séparation sont par là régulés au moins en partie selon la concentration de VOC détectée par le détecteur de VOC.

2. Appareil de régulation selon la revendication 1, dans lequel l'extracteur de vapeurs est régulé au moins en partie selon la sortie du détecteur de VOC de telle sorte que le débit le long du conduit est réduit lorsque la concentration de VOC dans la mise à l'air dépasse un seuil prédéterminé.

3. Appareil selon la revendication 1 ou 2, dans lequel l'extracteur de vapeurs est disposé dans le premier conduit entre le réservoir et le module de séparation.

4. Appareil selon l'une quelconque des revendications précédentes comprenant une vanne d'évacuation associée a la sortie de rétentat pour restreindre l'écoulement de vapeurs à travers la sortie au moins en partie selon les données de sortie du détecteur de VOC.

5. Appareil selon la revendication 4, dans lequel la vanne d'évacuation agit pour augmenter la pression à l'entrée/côté du rétentat du module de séparation lorsque le détecteur de VOC indique que la concentration de VOC dans la mise à l'air dépasse un seuil prédéterminé.

6. Appareil selon la revendication 2 ou 5, dans lequel le seuil prédéterminé est une variable dépendant au moins d'un autre paramétre.

7. Appareil selon l'une quelconque des revendications précédentes, dans lequel le moyen de régulation comprend un programme pour réguler l'extracteur de vapeurs destiné à extraire les vapeurs à une vitesse plus faible que le maximum pouvant être réalisé par l'extracteur pour fournir un long temps de séjour pour les molécules des vapeurs de VOC à côté de la membrane de séparation et augmenter par là la séparation des molécules de VOC à partir du rétentat vers le perméat.

8. Appareil selon l'une quelconque des revendications précédentes, dans lequel l'extracteur de vapeurs comprend une pompe à vitesse variable.

9. Appareil selon l'une quelconque des revendications précédentes, dans lequel le second conduit s'étend vers une partie du réservoir sous le manque à remplir.

10. Appareil selon l'une quelconque des revendications précédentes comprenant une autre mise à l'air pour le réservoir présentant une vanne de surpression fixée sur son dessus pour une ouverture si une pression sensiblement en excès du seuil de pression est atteinte dans le manque à remplir.

11. Appareil selon l'une quelconque des revendications précédentes comprenant un détecteur de température en aval de l'extracteur de vapeurs pour introduire une température détectée dans le moyen de régulation et le moyen de régulation présentant un programme pour arrêter l'extraction des vapeurs par l'extracteur de vapeurs si une élévation de température indésirable est détectée.

12. Appareil selon l'une quelconque des revendications précédentes comprenant en outre un détecteur de température en aval de ladite pompe de vapeurs et destiné à introduire une température détectée dans le moyen de régulation et le moyen de régulation présentant un programme pour interrompre l'extraction de vapeurs par l'extracteur de vapeurs si une élévation de température indésirable est détectée.

13. Appareil selon l'une quelconque des revendications précédentes comprenant en outre un détecteur de débit associé à ladite sortie de rétentat pour fournir des signaux de débit au moyen de régulation, dans lequel le moyen de régulation contrôle le débit d'évacuation à travers la sortie du rétentat, et pour arrêter l'extraction de vapeurs par l'extracteur de vapeurs si le débit d'évacuation contrôlé indique un mauvais fonctionnement.

14. Appareil selon l'une quelconque des revendications précédentes comprenant en outre une minuterie, dans lequel le moyen de régulation comprend un programme pour contrôler la durée d'extraction de vapeurs et pour arrêter l'extraction de vapeurs par l'extracteur de vapeurs si la durée indique un mauvais fonctionnement.

15. Appareil selon l'une quelconque des revendications précédentes pour réduire les émissions de VOC à partir d'un réservoir de stockage de carburant.

16. Système de récupération de vapeurs pour un distributeur de carburant utilisant un appareil selon la revendication 15.

17. Procédé pour réduire la pression dans un manque à remplir d'un réservoir de matières chimiques organiques volatiles comprenant les étapes consistant : à détecter la pression dans le manque à remplir du réservoir de matières chimiques organiques volatiles, à soutirer des vapeurs du manque à remplir du réservoir de matières chimiques organiques volatiles lorsque la pression détectée dépasse un seuil de pression, à diriger les vapeurs soutirées vers un premier côté d'une membrane de séparation, à créer une pression plus faible sur le second côté en aval de la membrane de séparation afin de forcer les vapeurs choisies à perméer à travers ladite membrane de séparation, à laisser s'échapper le rétentat à partir du côté adjacent au premier côté de la membrane de séparation vers l'atmosphère, à détecter les concentrations de VOC dans le rétentat qui s'échappe et réguler la vitesse de l'étape de soutirage des vapeurs pour réguler la concentration de VOC dans le rétentat qui s'échappe pour maintenir une telle concentration à un faible niveau.

18. Procédé selon la revendication 17, dans lequel ladite étape de soutirage comprend le pompage de vapeurs à partié du réservoir de matières chimiques organiques volatiles et ladite étape de régulation comprend la régulation de la vitesse à laquelle les vapeurs sont pompées.

19. Procédé selon la revendication 17 ou 18, dans lequel l'étape consistant à laisser le rétentat s'échapper à partir du côté adjacent au premier côté de la membrane de séparation comprend en outre la régulation de l'ouverture d'une vanne de régulation pour le rétentat pour permettre un échappement régulé d'air relativement exempt de VOC vers l'atmosphère.
